# EUROPÄISCHE PATENTSCHRIFT

(11) **EP 1 506 361 B1**
(45) Veröffentlichungstag und Bekanntmachung des Hinweises auf die Patenterteilung: **16.07.2008**
(21) Anmeldenummer: 03740021.5
(22) Anmeldetag: 23.05.2003
(51) Int. Cl.: F16K 1/20

(54) **ABSPERRARMATUR**
SHUT-OFF FITTING
APPAREIL DE SECTIONNEMENT

(30) Priorität: 23.05.2002 DE 10222963
(43) Veröffentlichungstag der Anmeldung: 16.02.2005
(73) Patentinhaber: Friatec Aktiengesellschaft, 68229 Mannheim (DE)
(72) Erfinder: SCHWARTZ, Simon, 66994 Dahn (DE); ROTHERMEL, Alexander, 69198 Schriessheim (DE); MAIER, Fabian, 67368 Westheim (DE); ELSASSER, Dirk, 68199 Mannheim (DE); GEHR, Heiko, 76829 Landau/Pfalz (DE); SICHLER, Wolfgang, 68239 Mannheim (DE); SCHMITT, Harald, 68309 Mannheim (DE); SCHNEIDER, Michael, 68309 Mannheim (DE); SCHMICH, Ralf, 69124 Heidelberg (DE)
(74) Vertreter: Tönhardt, Marion
(86) Internationale Anmeldenummer: PCT/DE2003/001671
(87) Internationale Veröffentlichungsnummer: WO 2003/100302

(56) Entgegenhaltungen:
- EP-A- 0 493 029
- DE-B- 1 042 323
- DE-U- 29 519 740
- FR-A- 608 182
- FR-A- 910 335
- FR-A- 1 147 893
- US-A- 3 119 594
- US-A- 4 558 718

## Beschreibung

Die Erfindung betrifft eine Absperrarmatur, mit einem Gehäuse, das druckdicht mit einer angrenzenden Rohrleitung zu verbinden ist, welche durch ihren Durchmesser einen Rohrdurchgang definiert, und mit mindestens einem Abschlußkörper für die Rohrleitung, der zwischen einer Offenstellung und einer Schließstellung bewegbar ist.

Solche Absperrarmaturen sollen möglichst wartungsarm und korrosionsfrei sein. Sie können aus Metall oder Kunststoff bestehen, wobei Armaturen aus thermoplastischen Werkstoffen den Vorteil haben, daß nicht nur die einzelnen Gehäuseteile mittels bekannter Schweißverfahren mit Spiegel-Heizelementmuffen oder Heizwendelschweißtechnik stoffschlüssig gefügt werden können, es kann auch ebenso auf einfache Weise eine Anbindung an ein bestehendes PE-Rohrnetz erfolgen.

Metallische Absperrarmaturen nach dem Stand der Technik sind im Betrieb insbesondere in einem Trinkwassernetz der Korrosion und starken Inkrustierung ausgesetzt. Dies kann zu Störungen bis hin zum Versagen der Dichtfunktion und Beschädigung der Absperrarmatur führen. Aufgrund des hohen Gewichts und der mechanischen Einbindung, üblicherweise über einen Flanschanschluß mit Schrauben, unterliegen die metallischen Absperrarmaturen insbesondere im erdverlegten Bereich starken korrosiven Einflüssen.

Dichtschließende Abschlußkörper haben sich in vielen Prozessen, auch denen, die unter höherem Druck und höherer Temperatur ablaufen, gut bewährt. Bei den meisten Ausgestaltungen handelt es sich um einen Abschlußkörper, der sich quer zur Strömung um eine Achse dreht und in der Offenstellung umströmt wird.

Aus der DE 10 13 135 ist eine Hochdruck-Rückschlagklappe aus Schmiedestahl bekannt, die um eine außerhalb des Rohrdurchgangs angeordnete Achse in eine Aussparung im Rohr so verschwenkt werden kann, daß der Rohrdurchgang frei wird. In geschlossenem Zustand liegt die Klappe bzw. der Abschlußkörper axial auf einer im Rohrdurchgang angeordneten ringförmigen Auflagefläche.

Aus der GB 2 009 877 A ist ein Rohr mit zwei beabstandeten Schließklappen bekannt, die im wesentlichen ein weiterentwickeltes Rückschlagventil bilden. Eine der Klappen ist mittels eines Arretiermechanismus in ihrer Schließstellung zu halten.

Die US 4,064,916 zeigt eine knautschbare Sperrblase, die mittels eines Seilzuges aus dem Rohrdurchgang gezogen werden kann.

Für manche Anwendungen, insbesondere bei solchen mit relativ geringen Rohrdurchmessern, beispielsweise für den Trinkwasserbereich, stellt ein solcher Abschlußkörper ein Strömungshindernis dar. Ein Durchfahren des Rohres mit einem Reinigungsmolch ist somit selbst in der Offenstellung nicht möglich.

Die US 4,706,706 betrifft lediglich ein Rückschlagventil mit einer Ventilklappe auf einem verschwenkbaren Hebel, welche bei einem Rückfluß des Mediums als sperrendes Glied die Rohrleitung sperren. Strömt jedoch ein Medium in Durchflußrichtung, schwenkt die Ventilklappe immer in Richtung Offenstellung, sie läßt sich nicht absperren. Mittels eines vertikal zur Strömungsrichtung des Mediums angeordneten Stellantriebs wird die Ventilklappe über einen Anlenkmechanismus in Offenstellung gehalten, wenn der Stellantrieb eingefahren ist. In dieser Position sind das Rückschlagventil und die Rohrleitung molchbar. Wird der Stellantrieb wieder ausgefahren, ist die Ventilklappe wieder freigegeben für den Normalbetrieb, in welchem sie aufschwenkt, wenn eine Strömung in Durchflußrichtung erfolgt, und in welchem sie durch ein rückfließendes Medium zugeschwenkt wird.

Die FR 910 353 A strebt an, den Luftdurchsatz durch Hochdruckrohre zu regeln. Dabei arbeitet ein mechanisches Regelsystem gegen die Kraft einer Feder und entfernt zwei Flügel mehr oder weniger voneinander, wobei sich die Flügel entsprechend in Lagerräume bewegen. Die Flügel arbeiten in einem vom eigentlichen Rohr getrennten kastenförmigen Gehäuse. In der Schließstellung der beiden Flügel können diese nicht mit Druck gegen den Rohrdurchgang beaufschlagt werden.

Die FR 608 182 A befaßt sich damit, bei einem Einweghahn das Einschleifen des Ventilklappensitzes zu vereinfachen und gleichermaßen zu verhindern, daß sich strömungsbehindernde Ablagerungen am Ventilklappensitz und im Hahn selber bilden. Die Ventilklappen sind dabei für hohen Druck ausgelegt und über Hebel mit einer Gewindestange verbunden und werden durch deren entsprechende Betätigung aus dem Rohrdurchmesser herausgezogen, wobei sie um Achsen verschwenkt werden.

Die DE 295 19 740 betrifft eine Absperrklappe und ist mit einem feststehenden Sporn versehen, an dessen freiem Ende ein gelenkig angebrachter Hebel für die Verbindung mit einer Spindel sorgt. Die Klappenscheibe kann dabei im Gehäuse zentrisch oder exzentrisch oder doppelexzentrisch gelagert sein.

Die EP 0 493 029 A1 offenbart ein Steuerventil mit einem Anlenkmechanismus mit zwei Absperrkörpern. Diese sind über ein Kugelgelenk mit einem Mittel zum Kuppeln verbunden, welches an seinem anderen Ende angelenkt ist an eine vertikal zur Strömungsrichtung angeordneten Welle.

Die US 3 119 594 offenbart ein Stellventil mit nur einer Ventilklappe, welche eine Steuerkurve aufweist, in die ein Stift eingreift, welcher quer zur Strömungsrichtung auf einer vertikalen Welle angeordnet ist.

Es ist daher die Aufgabe der Erfindung, eine Absperrarmatur aus thermoplastischem Material, das gegebenenfalls verstärkt werden kann, so zu gestalten, daß sie molchbar und ihr Stelllantrieb störunanfällig ist.

Diese Aufgabe wird durch eine Absperrarmatur gelöst, wie sie im einzigen Patentanspruch definiert ist.

Erfindungsgemäß ist vorgesehen, daß die Abschlußkörper lediglich am Stellantrieb angelenkt sind. Die Abschlußkörper liegen dann sozusagen im Rohr und finden durch Formschluß unter Einfluß der Reaktionskräfte der Hydraulik ihren Weg. Die Abschlußkörper sind selbststabilisierend und zeigen eine größere Flexibilität im Hinblick auf die Dichtkanten.

Mit der Erfindung läßt sich eine molchbare glatte Rohrsohle erzeugen. Der Anlenkmechanismus arbeitet mit Druckunterstützung beim Schließ- und Öffnungsvorgang. Die gegenüberstehenden Abschlußkörper sorgen für einen geringen Totwasserraum, was bei Stagnation die Verkeimung herabsetzt. Geringe Betätigungsmomente im Ablauf begünstigen den Kraft- und Spannungsverlauf für das Gehäusedesign. Ganz allgemein gilt, daß die Anzahl der Gelenkpunkte bzw. Drehachsen aus Kostengründen und wegen der Störanfälligkeit möglichst klein zu halten ist.

Im folgenden soll die Erfindung lediglich beispielhaft anhand der Zeichnung näher erläutert werden. Es zeigt:
- Figur 1: eine Schnittansicht eines Anlenkmechanismus für eine Absperrarmatur gemäß einer Ausführungsform der Erfindung; und
- Figur 2: eine perspektivische Darstellung, teilweise aufgeschnitten, einer Absperrarmatur mit dem Anlenkmechanismus der Figur 1.

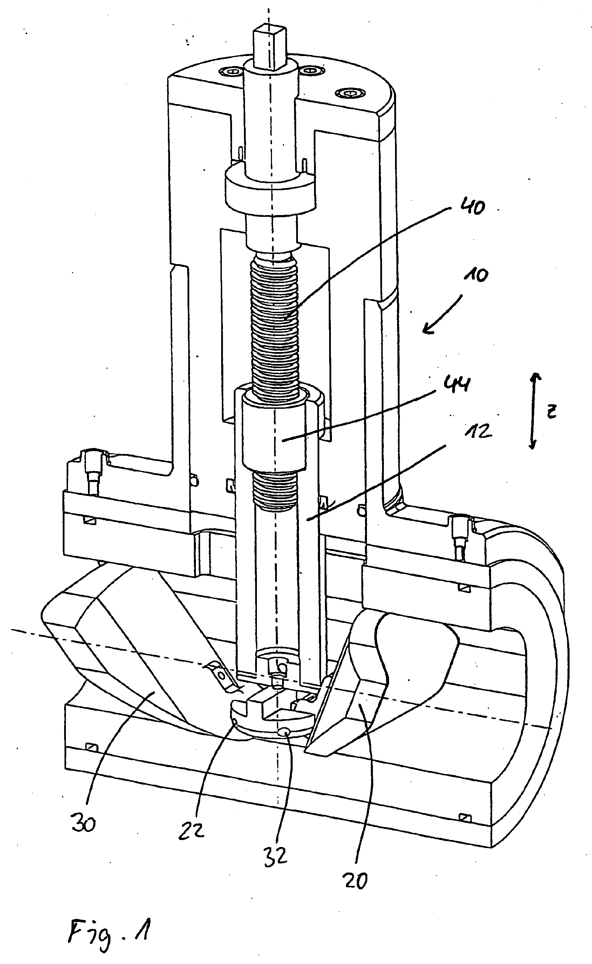

Figur 1 zeigt in schematischer Schnittansicht eine Absperrarmatur, mit einem Gehäuse 10, das druckdicht mit angrenzenden Rohrleitungen 110, 120 zu verbinden ist. Grundsätzlich kann die Absperrarmatur auch als Überschiebarmatur gestaltet sein. Die Abdichtung auf dem PE-Rohr kann jeweils mittels der Heizwendelschweißtechnik erfolgen. Durch den Innendurchmesser der Rohrleitungen ist auch im Inneren des Gehäuses 10 ein Rohrdurchgang definiert. Jede Rohrleitung ist durch einen Abschlußkörper 20, 30 verschließbar, die über einen Anlenkmechanismus, der im folgenden noch näher beschrieben wird, mit dem Gehäuse 10 der Absperrarmatur einerseits und mit einem Stellantrieb, der in Richtung des Doppelpfeiles z in vertikaler Richtung bewegbar ist, andererseits schwenkbar verbunden. Der Stellantrieb besteht aus einer nichtsteigenden Spindel 40, die in dem Gehäuse 10 drehbar gelagert ist. Die Spindel 40 greift auf übliche Weise in eine Gewindehülse 44, die sich in einer im Gehäuse 10 vorgesehenen Führung 12 bewegen kann. Die Spindel 40 bzw. die Gewindehülse 44 werden durch eine Lippendichtung, in der Zeichnung nicht dargestellt, abgedichtet.

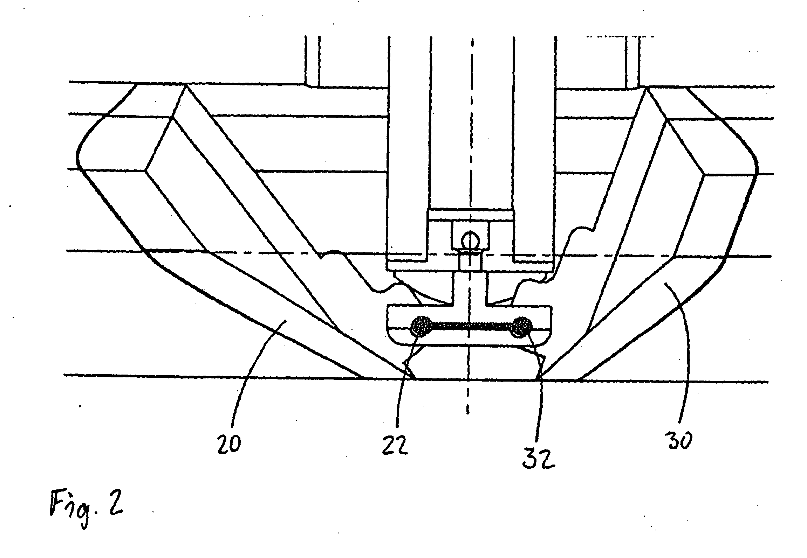

Bei der Ausführungsform, wie sie in Figur 1 dargestellt ist, sind die Abschlußkörper 20, 30 lediglich an den stellantriebsfesten Achsen 22, 32 angelenkt, so daß sich die Abschlußkörper 20, 30 um ihren jeweiligen Gelenkpunkt drehen können. Jeder Abschlußkörper 20, 30 liegt im Rohr und findet durch Formschluß seine exakte Position. Die Abschlußkörper 20, 30 wirken zusammen mit den hydraulischen Kräften im Rohrdurchgang, was zu einer beträchtlichen Vereinfachung des kinematischen Antriebs führt. Durch die relativ freie Beweglichkeit der Anschlußkörper 20, 30 zeigen diese eine große Flexibilität, da sie ihre Position optimiert für die Dichtung einrichten können. Durch ihre Profilierung werden sie selbststabilisierend im Rohrdurchgang. Figur 2 veranschaulicht dies in einer perspektivischen Darstellung.

Dabei ermöglicht es der Stellantrieb, daß nicht nur eine Offenstellung bzw. eine Schließstellung der Abschlußkörper und damit der Absperrarmatur eingestellt werden können, sondern auch jeweils definierte Zwischenstellungen, je nachdem, wie weit die Spindel abgesenkt oder angehoben wird.

Als Hauptwerkstoff für das Gehäuse ist hochdichtes Polyethylen (HDPE) vorgesehen, um eine einfache Anbindung an das bestehende Rohrnetz zu ermöglichen. Zusätzlich kann das Gehäuse durch eine Metalleinlage oder verstärkte thermoplastische Werkstoffe und eine Aussenarmierung aus Lang- oder Kurzfasern verstärkt werden.

## Patentansprüche

1. Absperrarmatur,
mit einem Gehäuse (10), das druckdicht mit einer angrenzenden Rohrleitung (110, 120) verbunden ist, welche durch ihren Durchmesser einen Rohrdurchgang in dem Gehäuse definiert, und
mit zwei Abschlußkörpern (20, 30), die über einen Anlenkmechanismus mit einem vertikal zur Strömungsrichtung (x) bewegbaren Stellantrieb (40, 44) zwischen einer Offenstellung und einer Schließstellung bewegbar sind,
wobei jeder Abschlußkörper (20, 30) in seiner Offenstellung außerhalb des Rohrdurchganges angeordnet ist, und eine Kontur aufweist, die in Schließstellung radial dichtend an dem Rohrdurchgang anliegt und in Offenstellung eine molchbare glatte Rohrsohle erzeugt;
wobei am unteren Ende des Stellantriebs (40, 44) zwei antriebsfeste Achsen (22, 32) angeordnet sind,
**dadurch gekennzeichnet, daß** jeder der Abschlußkörper (20, 30) lediglich an einer der antriebsfesten Achsen (22, 32) schwenkbar angelenkt ist und ein U-formiges Profil aufweist.

## Claims

1. Shut-off fitting, with a housing (10) which is connected, pressure-tight, to a contiguous pipeline (110, 120) which by its diameter defines a pipe passage in the housing, and with two closing-off bodies (20, 30) which, via an articulation mechanism, can be moved between an open position and a closed position by means of an actuating drive (40, 44) movable vertically with respect to the flow direction (x), each closing-off body (20, 30) being arranged, in its open position, outside the pipe passage and having a contour which, in the closed position, bears radially sealingly against the pipe passage and, in the open position, generates a piggable smooth pipe base, two axles (22, 32) fixed to the drive being arranged at the lower end of the actuating drive (40, 44), **characterized in that** each of the closing-off bodies (20, 30) is articulated pivotably solely on one of the axles (22, 32) fixed to the drive and has a U-shaped profile.

## Revendications

1. Appareillage de fermeture, comportant
un boîtier (10), qui est relié de manière étanche sous pression avec une conduite adjacente (110, 120), qui définit par son diamètre un passage de tube dans le boîtier, et
deux corps de fermeture (20, 30), qui sont mobiles entre une position d'ouverture et une position de fermeture par l'intermédiaire d'un mécanisme d'articulation comportant un organe moteur (40, 44) mobile de manière verticale par rapport au sens d'écoulement (x),
chaque corps de fermeture (20, 30) étant agencé dans sa position d'ouverture à l'extérieur du passage de tube, et présentant un contour, qui, en position de fermeture, s'ajuste de manière radialement étanche au passage de tube et produit, en position d'ouverture, un fond de tube lisse pouvant être raclé ;
deux axes (22, 32) à entraînement fixe étant agencés au niveau de l'extrémité inférieure de l'organe moteur (40, 44),
**caractérisé en ce que** chacun des corps de fermeture (20, 30) est simplement articulé de manière à pouvoir être pivoté au niveau d'un des axes (22, 32) à entraînement fixe et présente un profil en forme de U.
